(19) Europäisches Patentamt / European Patent Office / Office européen des brevets

(11) **EP 3 001 145 A1**

(12) **EUROPEAN PATENT APPLICATION**

(43) Date of publication:
**30.03.2016 Bulletin 2016/13**

(51) Int Cl.:
**G01C 21/16** (2006.01) **G01B 21/00** (2006.01)
**G01P 15/00** (2006.01)

(21) Application number: **15186786.8**

(22) Date of filing: **25.09.2015**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **26.09.2014 US 201414498530**

(71) Applicant: **Xsens Holding B.V.**
**7521 PR Enschede (NL)**

(72) Inventors:
• **Hol, Jeroen D.**
**7552 NC Hengelo (NL)**
• **Bellusci, Giovanni**
**7551 AE Hengelo (NL)**

(74) Representative: **V.O.**
**P.O. Box 87930**
**2508 DH Den Haag (NL)**

(54) **INERTIAL OBJECT DIMENSIONING**

(57) A system and method for determining the dimensions of a cuboid package or other package having edges, faces and comers via a portable inertial motion-sensing device entails placing the inertial motion-sensing device sequentially on a plurality of points of interest on the package while collecting inertial data. The positions of the plurality of points of interest relative to one another are then calculated based on the collected inertial data, and the dimensions of the package are determined based on the calculated positions.

EP 3 001 145 A1

**Description**

TECHNICAL FIELD

The present disclosure is related generally to object measurement and, more particularly, to a system and method for accurately dimensioning an object via inertial measurement.

BACKGROUND

Dimensioning an object, or measuring its dimensions, is a required part of many tasks. For example, couriers and airliners often need to know the size of packages to be carried in order to optimize the use of transport capacity and to minimize damage to goods entrusted to them. Such entities may use software that takes the dimensions of each package as a required input. While manual entry of roughly guess dimensions is often used by employees when they pick up packages to be sent, such a technique can be inaccurate and error prone.

Certainly there have been attempts to devise a quick and accurate portable package measurement system. For example, US20130301929A1 describes a method to measure the dimensions of a package by placing an object of known geometry and dimension on a corner of the package followed by taking an image of the package from which the dimensions can be extracted. Similarly, US5477622 describes a method to measure the dimensions of a package using a tracing wheel, and US6373579 describes a method to measure the dimensions of a package using a laser and reflector. However, to date, such systems have not proven beneficial nor been widely adopted in practice.

While the present disclosure is directed to a system that may eliminate the shortcomings noted in this Background section, it should be appreciated that no such benefit is a necessary limitation on the scope of the disclosed principles or of the attached claims, except to the extent expressly recited in a claim. Additionally, the discussion of technology in this Background section is reflective of inventor observations or considerations, and is not intended to be admitted or assumed prior art as to the discussed details. Moreover, the identification of the desirability of a certain course of action is the inventors' observation, and should not be assumed to be an art-recognized desirability. The citation of references is not intended to provide a broad and inclusive summary of the references, and nothing in the foregoing is intended to conclusively characterize any reference. Rather, only the references themselves are art, and this section is expressly disclaimed as art, prior or otherwise.

SUMMARY OF THE DISCLOSURE

In an embodiment of the disclosed principles, a method is given for determining the dimensions of a package via a portable inertial motion-sensing device. The method comprises sequentially contacting a plurality of points of interest on the package with the inertial motion-sensing device while collecting inertial data, and calculating based on the collected inertial data the positions of the plurality of points of interest relative to one another. The dimensions of the package are determined based on the calculated positions.

In another embodiment of the disclosed principles, a method is given for determining the dimensions of a package via a portable inertial motion-sensing device. The method comprises sequentially placing the inertial motion-sensing device on plurality of points of interest on the package while collecting inertial data, and calculating based on the collected inertial data the positions of the plurality of points of interest relative to one another as well as a plurality of normal directions of package faces. The dimensions of the package are determined based on the calculated positions in combination with the normal directions.

According to an embodiment, the method further comprises determining that motion of the inertial motion-sensing device has ceased, and performing at least one of a zero velocity update and a zero rotation update while the device is motionless.

According to an embodiment, the inertial data include 3D accelerometer data and 3D gyroscope data.

According to an embodiment, determining the dimensions of the package further includes consulting a database containing dimensions of packages to improve the accuracy of the calculated package dimensions.

According to an embodiment, placing the inertial motion-sensing device sequentially on a plurality of points of interest on the package includes pressing a trigger of the inertial motion-sensing device to cause a measurement to be taken or to be stopped.

According to an embodiment, the method further collecting inertial data includes determining when the inertial motion-sensing device is located on a point of interest.

According to an embodiment, the method further comprises determining when the inertial motion-sensing device is located on a point of interest comprises determining that motion of the inertial motion-sensing device has ceased.

According to an embodiment, determining when the inertial motion-sensing device is located on a point of interest comprises detecting a characteristic motion pattern caused by placing the inertial motion-sensing device on a point of interest.

According to an embodiment, at least one of the points of interest is either a corner of the package or a point located on a face of the package.

According to an embodiment, at least one of the points of interest is located on a surface underlying the package.

According to an embodiment, each move of the inertial motion-sensing device includes a button press on a button of the inertial motion-sensing device.

In yet another embodiment of the disclosed principles, a portable inertial measuring device is provided for measuring a package. The device includes a housing and an inertial sensor set within the housing, the inertial sensor set including a 3D accelerometer and a 3D gyroscopic sensor. A controller within the housing is configured to collect inertial data as the device is moved sequentially to a series of points of interest associated with the package and to calculate the dimensions of the package based on the collected inertial data. In a non-limiting embodiment the device may be configured to carry out a method of the principle as described above.

According to an embodiment, the controller is further configured to employ at least one of 3D magnetometer data, pressure sensor data, ultrasound data, and Ultra-wideband radio data in order to improve positioning accuracy.

According to an embodiment, the controller is further configured to consult a database containing dimensions of packages to improve the accuracy of the calculated package dimensions.

According to an embodiment the controller is further configured to accept a trigger signal to signify a beginning or an end of a measurement.

According to an embodiment the controller is further configured to transmitting inertial data to a computing device remote from the portable inertial measuring device.

According to an embodiment the device housing comprises a corner mount socket.

According to an embodiment the device housing comprises a flat reference surface.

According to an embodiment the device housing comprises a reference point with a known spatial relationship to the inertial sensor set.

According to an embodiment the device housing has a stylus shape with a tip, and wherein the reference point is at the stylus tip.

## BRIEF DESCRIPTION OF THE SEVERAL VIEWS OF THE DRAWINGS

While the appended claims set forth the features of the present techniques with particularity, these techniques, together with their objects and advantages, may be best understood from the following detailed description taken in conjunction with the accompanying drawings of which:

Figure 1A is a schematic diagram of a device within which an embodiment of the disclosed principles may be implemented;

Figure 1B is a schematic diagram of a stylus device within which an embodiment of the disclosed principles may be implemented;

Figure 1C is a schematic diagram of a corner mount housing usable in an implementation of the disclosed principles;

Figure 2 is a simplified schematic of a package to be measured, showing points of interest usable in an embodiment of the disclosed principles;

Figure 3 is a data plot diagram showing typical 3D accelerometer and 3D gyroscope data plots associated with motion of a device in accordance with an embodiment of the disclosed principles;

Figure 4 is a data plot diagram showing position data associated with the 3D accelerometer and 3D gyroscope data plots of Figure 3 in accordance with an embodiment of the disclosed principles;

Figure 5 is a flow chart showing a process for dimensioning a package via inertial measurements in accordance with embodiments of the disclosed principles; and

Figure 6 is a flow chart showing an alternative process for dimensioning a package via inertial measurements in accordance with embodiments of the disclosed principles

## DETAILED DESCRIPTION

As can be seen from the inventor's observation above, there is, in the inventor's view, a need for a portable measurement system that provides automatic measurements for a courier employee when a package is collected or picked up by the employee. Before presenting a detailed discussion of embodiments of the disclosed principles, a brief general overview of certain embodiments is given to aid the reader in approaching the later discussion.

In overview, a portable measurement system and method are provided. The disclosed innovations allow a courier agent or employee to determine the dimensions of a cuboid-shaped package (i.e., a right cylinder having square or rectangular bases) or other package having faces, edges and corners using an inertial measurement device. The measurement is accomplished via this single, low-cost device, which is easy to operate and allows the user to quickly execute the measurement.

The housing of the device may include one or more shapes or surfaces depending upon the available usage modes of the device. For example, if the device is to be placed on package corners, then the device housing may expose a corner mount socket. If the device may alternatively or additionally be placed on package faces, then the device housing may alternatively or additionally include a flat reference surface on one or more sides. Further, the device housing may instead take on a stylus shape, and may have a lever arm that is accounted for or may include no lever arm

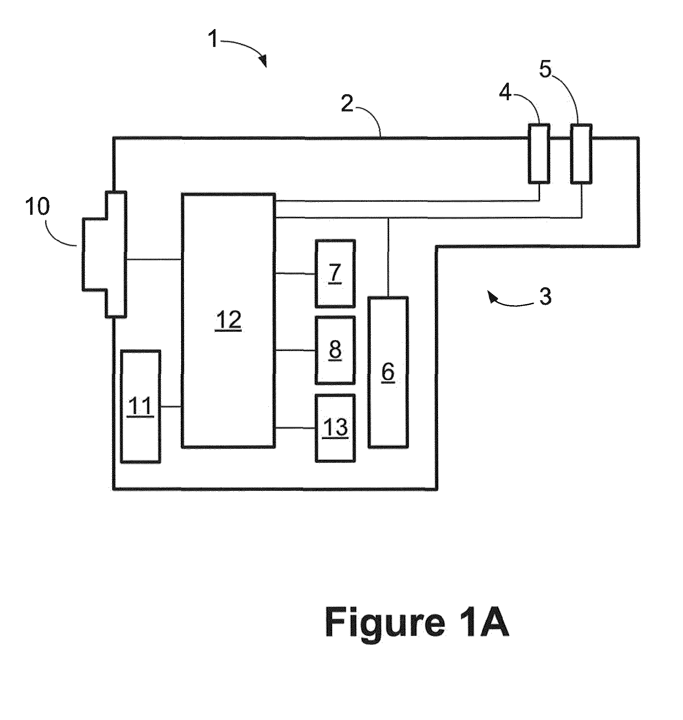

Turning now to a more detailed discussion in conjunction with the attached figures, techniques of the present disclosure are illustrated as being implemented in a suitable computing environment. The following description is based on embodiments of the disclosed principles and should not be taken as limiting the claims with regard to alternative embodiments that are not explicitly described herein. Thus, for example, while Figure 1A illustrates an example mobile device within which embodiments of the disclosed principles may be implemented, it will be appreciated that many other device types such as but not limited to laptop computers, tablet computers, personal computers, smartphone devices, electronic stylus pens, embedded automobile computing systems and so on may also be used.

In the illustrated embodiment, the device 1 has an exterior housing 2 with external features that may include a power or reset selector 4 and a charge or interface socket 5. The power or reset selector 4 may be used to power the device 1 on and off and/or to reset the device 1. The charge or interface socket 5 may be used to interface the device 1 to another computing device such as a PC or lap top computer for configuration, data download, software upload, and so on. Additionally the charge or interface socket 5 or other connection point may be used to charge a rechargeable battery 6 for powering the device 1.

The device 1 also includes a 3D accelerometer 7 as well as a 3D gyroscope 8. These elements 7, 8 may be consumer-grade products without affecting the effectiveness of the device 1. Finally, a trigger button 10 may be included to allow the operator to signify that the device 1 is positioned at a desired corner.

In an embodiment, a wireless interface 11 is included within the device 1 in order to facilitate wireless transfer of data, configuration information or device status for example, between the device 1 and another device such as a portable laptop computer or tablet computer carried by the operator. The wireless interface 11 may operate via one or both of a short range wireless protocol such as Bluetooth and a longer range protocol such as a WiFi, WAN or cellular protocol.

A microcontroller 12 coordinates the activities of the device 1 elements 4, 5, 6, 7, 8, 10, 11 during operation. The microcontroller 12 is configured via on-board memory 13 to execute a number of routines such as data collection (during measurement of a package), data transfer, and timing out/awakening of the device 1 (e.g., to enter and exit a sleep mode). The on-board memory 13 may be part of or separate from the microcontroller 12.

The exterior housing 2 can be configured in part to expose among others a corner mount socket 3 (shown in cross-section), a mechanical construction which defines the position of the corner as well as the normal directions to the package faces intersecting in said corner, e.g., having three planar sides which are mutually perpendicular and which intersect along three mutually perpendicular axes and at an origin point that resides in all three planes. Alternatively or additionally, the housing can be configured to provide a flat reference surface to be placed against the floor or against a face of the package, or may be formed having a stylus shape. Moreover, the device housing may or may not introduce a lever arm.

Using a sensor unit such as device 1 equipped with a 3D accelerometer and a 3D gyroscope, one can obtain the device's position trajectory and orientation trajectory in time using dead-reckoning (i.e., using inertial measurement without continuous reference to an external entity), and where the 3D gyroscope and 3D accelerometer signals are integrated to derive orientation and position. The inevitable drift that occurs during dead reckoning can be reduced significantly by applying zero velocity updates during periods when the device is stationary. Especially for short duration of a typical package measurement accurate position trajectories can be obtained from consumer grade MEMS sensors. For convenience of use, in one embodiment of the invention, the sensor unit is wireless and may transmit SDI data.

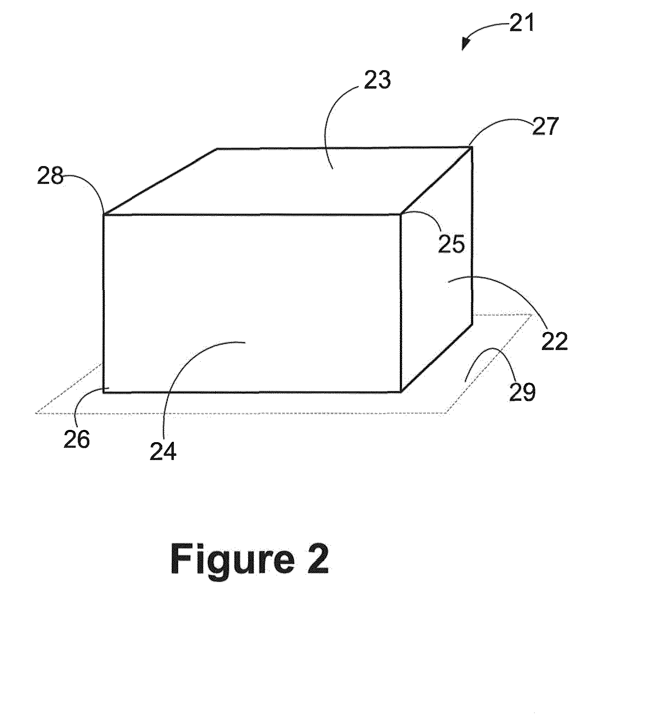

The simplified box drawing of Figure 2 shows an example package 21, and several points of interest on the package 21 or its environment. In particular, the package 21 contains planar surfaces that define its boundaries and corners that define those planar surfaces. Thus, for example, in the illustrated embodiment, the visible planar surfaces include a front face 22, a top face 23 and a side face 24. Bounding corners of these faces include but are not limited to a top front corner 25, a back bottom corner 26, a right top corner 27 and a left top corner 28.

Also in the illustrated configuration, the package 21 is resting on a planar surface 29. The planar surface 29 may be the ground, a floor, a table top, etc., and may be used both to assist in maintaining the package 21 in a stationary state as well as to extend the bottom surface of the package and make it easier to access.

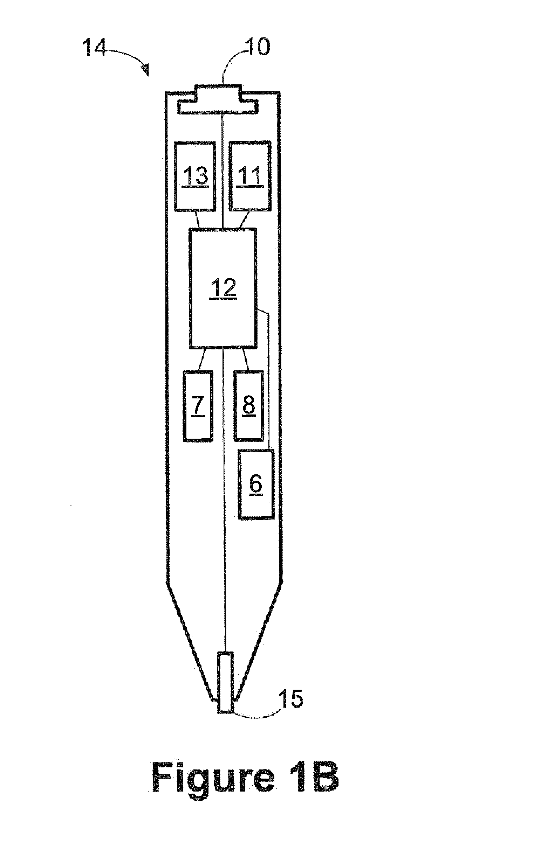

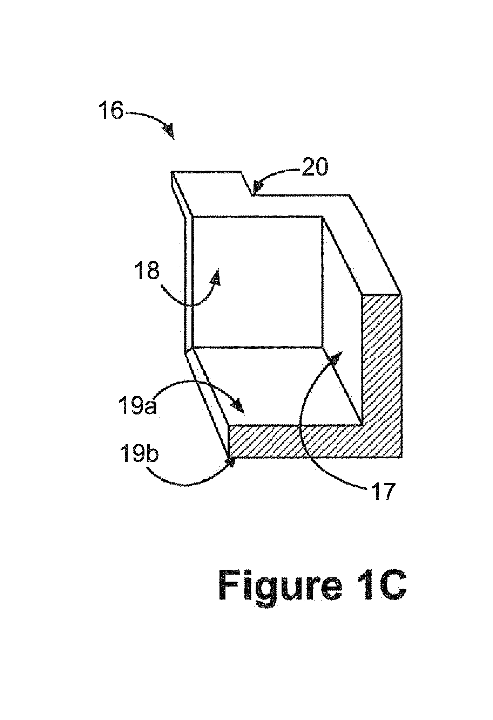

To measure the dimensions of a package such as package 21, the sensing device 1 of Figure 1 touches several points of interest of the package 21, while ensuring that the package does not move. In this way, the trajectory of the sensor unit contains or can be used to calculate the points of interest and provides information about the dimensions of the package. To identify the location of the points of interest in time, the device may use an operator trigger as discussed in Figure 1, a contact sensor, a pressure/force sensor, a proximity sensor, and/or a specific movement signature.

As to the latter, the movement signature may include holding the sensor unit stationary for a short period using a "tap and hold" movement, resulting in a particular signature on the 3D accelerometer and/or 3D gyroscope signals. This triggering approach has the added benefit that during the hold period, zero velocity updates and potentially zero rotation updates can be applied to reduce position drift and hence improve the measurement accuracy. In alternative embodiments, integration and/or sensor fusion with other technologies such as 3D magnetometers, pressure sensors, ultrasound, and UWB radio, are used to improve the positioning accuracy. In another embodiment, a database containing dimensions of packages can be used to improve the accuracy of the calculated package dimensions. The measurements can in turn be used to improve the entries in the database.

In an embodiment the measurement process entails sequentially touching various corners of the package while keeping the package stationary. For example, the device may touch a first corner and then touch the next corner which lies along one of the remaining axis (width, height, length), for a total of four corners. For instance, using Figure 2, one could start in corner 27, move to corner 25, continue to corner 28, and move down to the last corner 26. The gathered inertial data is then used to identify the distances between sequential pairs of points,

$$d = \|p_1 - p_2\|,$$

which translate to the package dimensions, i.e., its width, height and length. The device itself may perform the translation of inertial measurements into package dimensions or may instead communicate the data or intermediate results to another device for calculation and collection.

In another embodiment of the disclosed principles, the points of interest are points on the faces of the package. For instance, the device may touch 3 non-collinear points on a first face, 2 points on a second, non-parallel face, and 1 point on the 4 remaining faces, for a total of 9 points. In case the bottom face is hard to access, it can be replaced with the planar surface on which the package is resting. The gathered inertial data is then used to identify the relative positions between all the points. Segmenting the points into a first set of 6 points, one on each face, and a second set with the 3 remaining points, one can calculate the 3 unique normal directions of the 6 faces using the 3 difference vectors between the points in the second set and their corresponding point from the first set which is also on their face. The package dimensions are now obtained from the normal directions in combination with the 6 points of the first set by means of projecting the vector differences of pairs of points on opposite faces onto the corresponding normal direction vector of said faces,

$$d = |n \cdot (p_1 - p_2)|.$$

The two embodiments describe above rely on touching points of interest on the package. This is straightforwardly achieved when the device is constructed such that the 3D accelerometer sensing element can be used to touch the points of interest. Alternatively the housing can define a clear measurement point at a known location relative to the 3D accelerometer, which should be used to touch the points of interest, for instance when it is shaped like a stylus or pencil. Such a device is shown in Figure 1B. In particular, the illustrated device 14 includes the elements shown with respect to the device of Figure 1A, however enclosed in a device having a stylus form factor. The tip, which may optionally house a contact switch 15 to signal that the tip has contacted the package, lies at a distance $r_{device}$ from the inertial sensor group. In this case, the position of the point of interest can be derived from the position and orientation of the device using

$$p_{point} = p_{device} + R_{device} r_{device}.$$

As illustrated by the example of using 9 points on the faces of the package, the normal direction of the faces are very informative quantities in deriving the dimensions of the package. Instead of deriving these normal directions from points, they can also be derived from the orientation of the device. This results in embodiments which are disclosed in the following.

In an embodiment of the disclosed principles, the points of interest include points on all 6 faces of the package. The position of the points on each face can be chosen arbitrarily, as well as the order in which they are tapped. Since the bottom surface of the package is typically inaccessible, the point of interest on this surface can be replaced with any point on the surface where the package is resting on. Besides touching said points of interest with the device, for at least two non-parallel faces of the package, the normal direction vectors should be calculated. The package dimensions are now obtained from the 3 normal directions (the 3rd direction can be constructed from the first two) in combination with points on each face.

In another embodiment, the points of interest include corners as well as points on faces of the package. Such an approach can reduce the number of user actions since the number of points of interest are reduced. For example, the points of interest may be defined as at least two opposite corners on the top surface of the package and a point on the surface upon which the package is resting. The order in which these points of interest are touched is not important and can be chosen arbitrarily. Besides touching said points of interest with the device, for at least two non-parallel faces of the package, the normal direction vectors should be calculated. The package dimensions are now obtained from the normal directions in combination with the vector difference of the two corners and the vector difference with a corner and the point on the surface.

In a further embodiment, two diagonal opposite corners of the package are used as points of interest, e.g. one corner on the top face and the opposite corner on the bottom face, for instance corners 25 and 26 in Figure 2. Together with calculation of at least two normal directions of non-parallel faces of the package, the dimensions of the package can be obtained by projecting the vector difference between the two corners onto the three normal directions.

When available, additional points of interest or additional normal directions can be used to improve the accuracy of the dimensions and/or improve the robustness of the method by checking for consistency. The results of these checks can be used to generate feedback to the user.

Besides touching points of interest, the embodiments introduced above rely on obtaining normal directions. The latter can be achieved using a housing which defines a measurement surface with a known normal direction relative to the coordinate axis of the sensing elements. In that case, the direction of the normal vector of a package face can be derived from the orientation of the device using

$$n_{face} = R_{device} n_{device}.$$

If additionally the measurement point is defined to lie on said measurement surface, a point of interest and normal directions can be simultaneously obtained by positioning the measurement surface on a face of the package. The measurement surface can be made with certain surface properties, e.g., a texture or one or more protrusions, to prevent or inhibit movement while the device is pressed to a package face.

Alternatively, as noted above the housing of the device can be configured to expose a corner mount socket 3 as shown in Figure 1A, i.e., a mechanical construction which defines both the position of the corner as well as the three normal directions to the package faces intersecting in said corner relative to the sensing element. The perspective view shown in Figure 1C illustrates the configuration of an example corner mount housing 16. The illustrated corner mount can for instance be realized using three measurement surfaces 17, 18, 19a which are mutually perpendicular and which intersect along three mutually perpendicular axes and at an origin point that resides in all three planes. An alternative corner mount for bottom package corners such as 26 in Figure 2 can be realized using right cut-out 20 together with measurement surface 19b. By positioning the corner mount on a corner of the package, the position of the corner and three normal directions can be obtained simultaneously. The surfaces of the corner mount can be made with certain surface properties, e.g., a texture or one or more protrusions that prevents or inhibits movement while the device is pressed to a package corner.

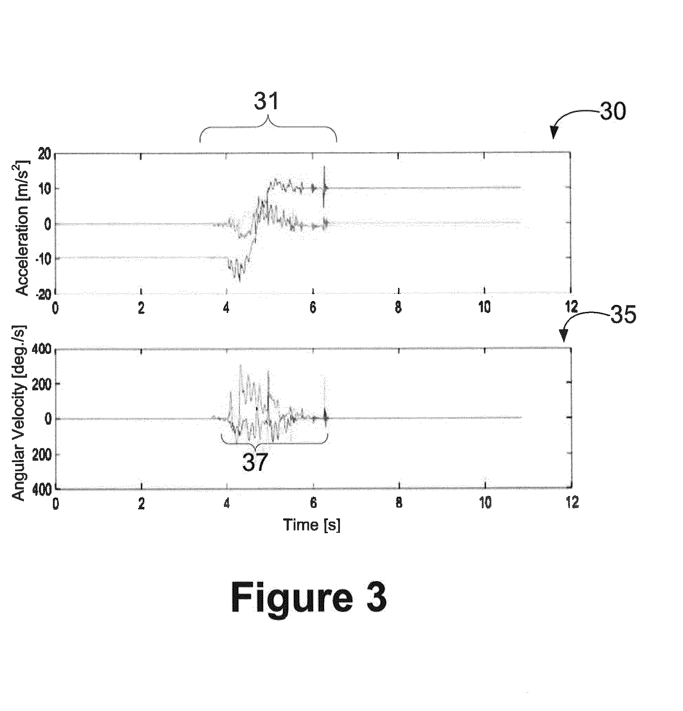

A typical dataset from such an embodiment is shown in the data plots of Figure 3. The illustrated data plots include a 3D accelerometer data plot 30 and a 3D gyroscope data plot 35. As can be seen, the motion imparted to the device by the operator to go from one point of interest to the next causes a disturbance in the accelerometer and gyroscope data, e.g., in regions 31 and 37 respectively. The dimensions of the package can be extracted from the position trajectories indicated by the 3D accelerometer and gyroscope data.

It can be seen from the data shown in the accelerometer plot 30 that some axes experience positive and/or negative acceleration due to gravity (about 9.8 m/s$^2$). This can be used to (partially) estimate the accelerometer biases. With respect to the gyroscope data plot 35, it can be seen that all axes experience essentially zero angular acceleration except during the period 37 when the device is being repositioned. This can be used to estimate the gyroscope bias. As noted above, the 3D data is utilized to calculate the position and orientation of each point of interest via dead reckoning principles.

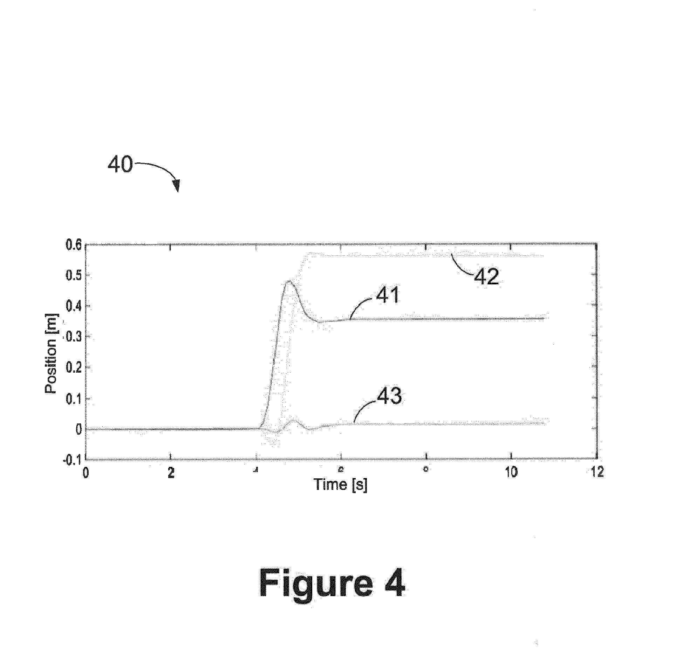

The resulting position data in keeping with the illustrated data plots of Figure 3 can be seen in the position plot 40 of Figure 4. Along a first dimension represented by plot trace 41, the device position starts at an origin and moves to about 0.35m in that dimension. Along a second dimension represented by plot trace 42, the device position starts at the origin and moves to about 0.55m. Finally, along a third dimension represented by plot trace 43, the device position starts at the origin and moves to about 0.02m.

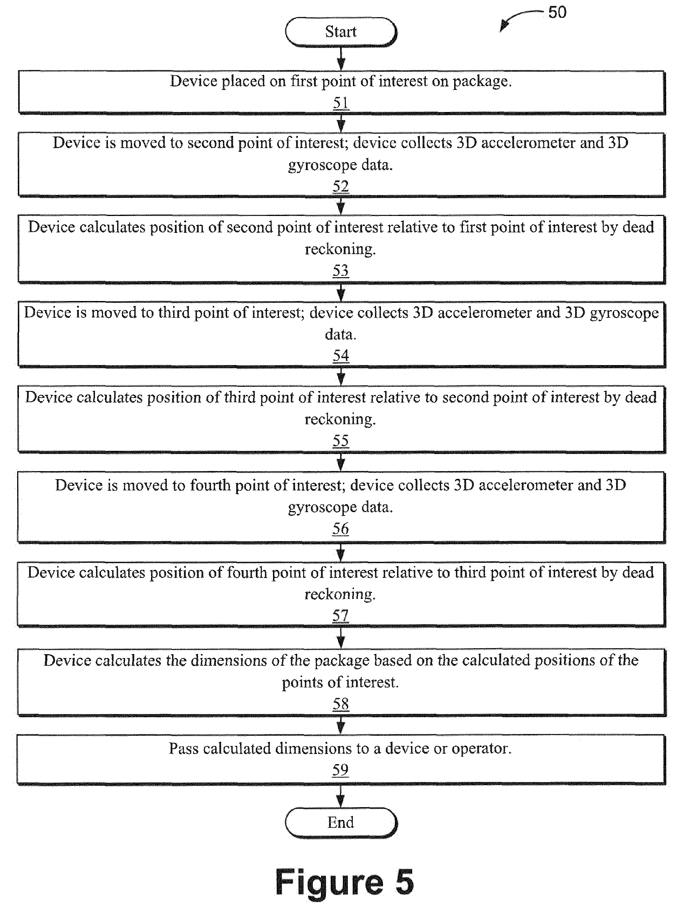

An exemplary process 50 for dimensioning a package in accordance with the disclosed principles is shown in the flowchart of Figure 5. In this example, the points of interest are the package corners. In the process shown, the device is placed on a first corner of a package at stage 51.

At stage 52, the device is moved to a second point of interest, and in parallel, the device collects 3D accelerometer and 3D gyroscope data. The device then calculates the position of the second point of interest relative to the first point of interest by dead reckoning the device position and orientation at stage 53. It is at this stage and similar stages, for example, that the lever arm between the device contact point and the sensors may be taken into account.

The device is then moved to a third point of interest at stage 54, and in parallel, the device collects 3D accelerometer and 3D gyroscope data. The device then calculates the position of the third point of interest relative to the second point of interest by dead reckoning at stage 55. A final move of the device to a fourth position is executed at stage 56, during which, again, the device collects 3D accelerometer and 3D gyroscope data in parallel, and at stage 57, the device calculates the position of the fourth point of interest relative to the third point of interest by dead reckoning.

The device then calculates the dimensions of the package at stage 58 based on the calculated positions of the points of interest. The calculated dimensions may be output to a device or operator at stage 59.

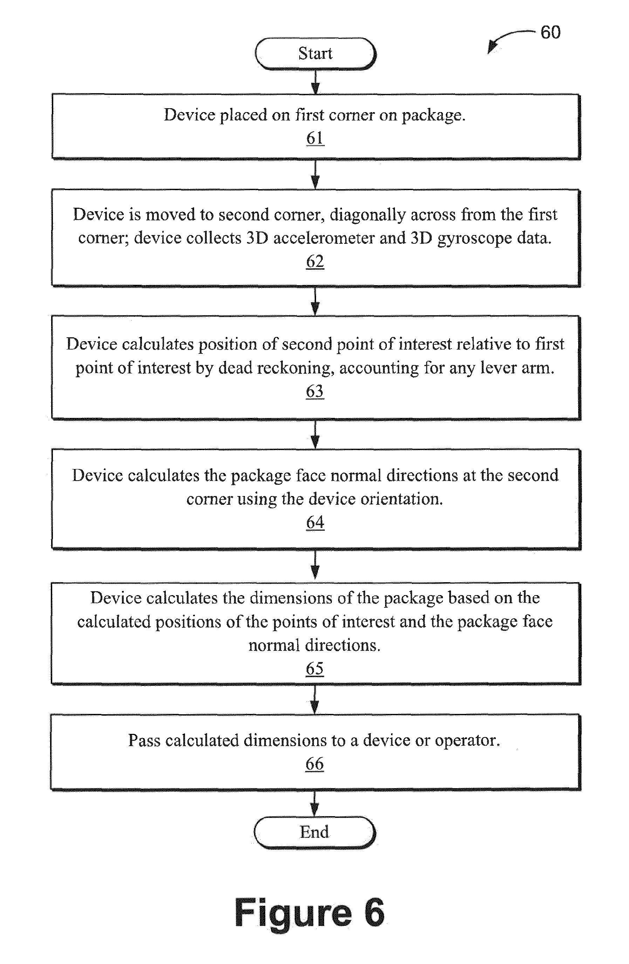

Another exemplary process 60 for dimensioning a package in accordance with the disclosed principles is shown in the flowchart of Figure 6. In this example, the points of interest are the package corners which are used in combination with the direction normal of the faces. In the process shown, the device is placed on a first corner on a package at stage 61.

At stage 62, the device is moved to a second corner, diagonally across from the first corner, and during the move, the device collects 3D accelerometer and 3D gyroscope data. The device then calculates the position of the second point of interest relative to the first point of interest via dead reckoning of the new device position and orientation at stage 63. It is at this stage that any lever arm between the device contact point and the sensors themselves within the device may be taken into account. At stage 64, the device calculates the package face normal directions at the second corner using the device orientation.

The device then calculates the dimensions of the package at stage 65 based on the calculated positions of the points of interest and the package face normal directions. The calculated dimensions may be output to a device or operator at stage 66.

It will be appreciated that a system and method for quickly and accurately dimensioning a package via inertial measurements has been disclosed. However, in view of the many possible embodiments to which the principles of the present disclosure may be applied, it should be recognized that the embodiments described herein with respect to the drawing figures are meant to be illustrative only and should not be taken as limiting the scope of the claims. Therefore, the techniques as described herein contemplate all such embodiments as may come within the scope of the following claims and equivalents thereof.

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

## Claims

1. A method of determining a plurality of dimensions of a package via a portable inertial motion-sensing device, the package having a plurality of faces and a plurality of corners, the method comprising:

   sequentially contacting a plurality of points of interest on the package with the inertial motion-sensing device while collecting inertial data;
   calculating, based on the collected inertial data, the positions of the plurality of points of interest relative to one another; and
   calculating dimensions of the package based on the calculated positions of the plurality of points of interest.

2. The method in accordance with claim 1, wherein the inertial data include 3D accelerometer data and 3D gyroscope data.

3. The method in accordance with claim 1 or 2, wherein each move of the inertial motion-sensing device includes a button press on a button of the inertial motion-sensing device.

4. The method in accordance with any of the preceding claims 1-3, wherein collecting inertial data includes determining that a point of interest has been reached.

5. The method in accordance with claim 4, wherein determining that a point of interest has been reached comprises determining that motion of the inertial motion-sensing device has ceased.

6. The method in accordance with claim 5, further comprising performing at least one of a zero velocity update and a zero rotation update during the stationary period.

7. The method in accordance with any of claims 4, 5 or 6, wherein determining that a point of interest has been reached comprises detecting a characteristic motion pattern caused by placing the inertial motion-sensing device on a point of interest.

8. The method in accordance with any of the preceding claims 1-7, wherein at least one of the points of interest is a corner of the package.

9. The method in accordance with any of the preceding claims 1-8, wherein at least one of the points of interest is located on a face of the package.

10. The method in accordance with any of the preceding claims 1-9, wherein at least one of the points of interest is located on a surface underlying the package.

11. The method in accordance with any of the preceding claims 1-10, wherein calculating the dimensions of the package further includes consulting a database containing dimensions of packages to improve the accuracy of the calculated package dimensions.

12. The method in accordance with any of the preceding claims 1-11, wherein sequentially contacting a plurality of points of interest on the package includes pressing a trigger of the inertial motion-sensing device to cause a measurement to be taken or to be stopped for each instance of contact.

13. A method of determining a plurality of dimensions of a package having a plurality of faces and a plurality of corners via a portable inertial motion-sensing device, for example a method according to any of the preceding claims, the method comprising:

   placing the inertial motion-sensing device sequentially on a plurality of points of interest on the package while collecting inertial data by the inertial motion-sensing device;
   calculating point data including at least one of a position and face normal direction for each of the plurality of points of interest relative to one another based on the collected inertial data; and
   determining the dimensions of the package based on the calculated point data of the plurality of points of interest relative to one another.

14. A portable inertial measuring device for measuring a package having a plurality of corners and a plurality of faces, for example a device configured to carry out a method according to any of the preceding claims 1-13, the device comprising:

   a housing;
   an inertial sensor set within the housing, the inertial sensor set including a 3D accelerometer and a 3D gyroscopic sensor; and
   a controller within the housing, the controller being configured to collect inertial data as the device is moved sequentially to a series of points of interest associated with the package and to calculate the dimensions of the package based on the collected inertial data.

15. The portable inertial measuring device in accordance with claim 14, wherein the controller is further configured to detect a stationary period wherein the device is not moving and to perform zero velocity updates during the hold period.

**Figure 1A**

**Figure 1B**

16 — 

20

18

19a

19b

17

**Figure 1C**

**Figure 2**

Figure 3

Figure 4

~50

```
        ┌─────────────────┐
        (      Start       )
        └─────────────────┘
                 │
                 ▼
┌─────────────────────────────────────────────────────────────────┐
│         Device placed on first point of interest on package.      │
│                              51                                    │
└─────────────────────────────────────────────────────────────────┘
                 │
                 ▼
┌─────────────────────────────────────────────────────────────────┐
│  Device is moved to second point of interest; device collects 3D  │
│            accelerometer and 3D gyroscope data.                    │
│                              52                                    │
└─────────────────────────────────────────────────────────────────┘
                 │
                 ▼
┌─────────────────────────────────────────────────────────────────┐
│ Device calculates position of second point of interest relative   │
│        to first point of interest by dead reckoning.               │
│                              53                                    │
└─────────────────────────────────────────────────────────────────┘
                 │
                 ▼
┌─────────────────────────────────────────────────────────────────┐
│  Device is moved to third point of interest; device collects 3D   │
│              accelerometer and 3D gyroscope data.                  │
│                              54                                    │
└─────────────────────────────────────────────────────────────────┘
                 │
                 ▼
┌─────────────────────────────────────────────────────────────────┐
│ Device calculates position of third point of interest relative    │
│       to second point of interest by dead reckoning.               │
│                              55                                    │
└─────────────────────────────────────────────────────────────────┘
                 │
                 ▼
┌─────────────────────────────────────────────────────────────────┐
│  Device is moved to fourth point of interest; device collects 3D  │
│               accelerometer and 3D gyroscope data.                 │
│                              56                                    │
└─────────────────────────────────────────────────────────────────┘
                 │
                 ▼
┌─────────────────────────────────────────────────────────────────┐
│ Device calculates position of fourth point of interest relative   │
│        to third point of interest by dead reckoning.               │
│                              57                                    │
└─────────────────────────────────────────────────────────────────┘
                 │
                 ▼
┌─────────────────────────────────────────────────────────────────┐
│ Device calculates the dimensions of the package based on the      │
│     calculated positions of the points of interest.               │
│                              58                                    │
└─────────────────────────────────────────────────────────────────┘
                 │
                 ▼
┌─────────────────────────────────────────────────────────────────┐
│       Pass calculated dimensions to a device or operator.         │
│                              59                                    │
└─────────────────────────────────────────────────────────────────┘
                 │
                 ▼
        ┌─────────────────┐
        (       End        )
        └─────────────────┘
```

# Figure 5

~ 60

Start

Device placed on first corner on package.
61

Device is moved to second corner, diagonally across from the first corner; device collects 3D accelerometer and 3D gyroscope data.
62

Device calculates position of second point of interest relative to first point of interest by dead reckoning, accounting for any lever arm.
63

Device calculates the package face normal directions at the second corner using the device orientation.
64

Device calculates the dimensions of the package based on the calculated positions of the points of interest and the package face normal directions.
65

Pass calculated dimensions to a device or operator.
66

End

# Figure 6

Europäisches
Patentamt

European
Patent Office

Office européen
des brevets

# EUROPEAN SEARCH REPORT

Application Number

EP 15 18 6786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/100813 A1 (SHOWERING PAUL EDWARD [GB]) 10 April 2014 (2014-04-10) * paragraphs [0019], [0020], [0023], [0034], [0043]; figure 1 * ----- | 1-15 | INV. G01C21/16 G01B21/00 G01P15/00 |
| X | EP 2 395 316 A1 (KNAUER MARTIN [DE]) 14 December 2011 (2011-12-14) * abstract * * paragraphs [0040], [0041], [0047] * ----- | 1-3, 12-14 | |
| A | WO 2004/046651 A1 (ROCK ALAN GEORGE [GB]; ROCK ANGUS JAMES [GB]) 3 June 2004 (2004-06-03) * page 11, line 24 - page 12, line 3 * * page 8, line 2 - line 4 * * figures 4,5 * ----- | 5-7,15 | |
| A | US 7 161 688 B1 (BONNER BRETT [US] ET AL) 9 January 2007 (2007-01-09) * column 15, line 51 - column 16, line 3; figure 26 * ----- | 11 | |
| | | | TECHNICAL FIELDS SEARCHED (IPC) G01B G01P G01C |

The present search report has been drawn up for all claims

| Place of search | Date of completion of the search | Examiner |
|---|---|---|
| The Hague | 16 February 2016 | Vanhaecke, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 6786

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2016

| Patent document cited in search report | | Publication date | Patent family member(s) | | Publication date |
|---|---|---|---|---|---|
| US 2014100813 | A1 | 10-04-2014 | NONE | | |
| EP 2395316 | A1 | 14-12-2011 | DE 102010017304 A1<br>EP 2395316 A1 | | 15-12-2011<br>14-12-2011 |
| WO 2004046651 | A1 | 03-06-2004 | AU 2003282242 A1<br>CA 2506043 A1<br>EP 1565704 A1<br>GB 2409731 A<br>GB 2426827 A<br>JP 2006506654 A<br>US 2006053645 A1<br>WO 2004046651 A1 | | 15-06-2004<br>03-06-2004<br>24-08-2005<br>06-07-2005<br>06-12-2006<br>23-02-2006<br>16-03-2006<br>03-06-2004 |
| US 7161688 | B1 | 09-01-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130301929 A1
- US 5477622 A
- US 6373579 B